# FASCICULE DE BREVET EUROPEEN

(11) **EP 1 867 511 B1**
(45) Date de publication et mention de la délivrance du brevet: **06.01.2010**
(21) Numéro de dépôt: 07290737.1
(22) Date de dépôt: 12.06.2007
(51) Int. Cl.: B60J 7/185

(54) **Véhicule à toit bloqué à l'arrière et procédé de commande de ce toit**
Fahrzeug mit nach hinten blockiertem Dach und Verfahren zur Steuerung dieses Dachs
Vehicle with roof locked at the rear and method of controlling this roof

(30) Priorité: 14.06.2006 FR 0605310
(43) Date de publication de la demande: 19.12.2007
(73) Titulaire: Heuliez, 79142 Cerizay Cedex (FR)
(72) Inventeur: Vanacker, Ludovic, 79300 Breuil-Chaussée (FR)
(74) Mandataire: Pichat, Thierry

(56) Documents cités:
- EP-A- 1 595 729
- WO-A-2004/041572
- DE-A1- 10 107 077
- DE-A1- 10 260 792
- DE-A1- 19 935 732
- FR-A1- 2 820 692

## Description

L'invention concerne un toit escamotable pour un véhicule automobile, ainsi qu'un tel véhicule.

On connaît déjà de tels toits escamotables comprenant des éléments de toit avant et arrière articulés l'un sur l'autre, l'élément de toit arrière étant en outre monté articulé sur la caisse. Un mécanisme d'entraînement entraine en déplacement lesdits éléments de toit entre une position fermée où ils sont déployés l'un derrière l'autre et recouvrent l'habitacle et une position escamotée dans laquelle ils sont repliés à l'écart du dessus de cet habitacle.

DE-A-101 07 077 décrit la préambule de la revendication 1 annexée.

Un problème qui se pose est lié à ce que l'élément arrière de toit, qu'il comprenne un ou plusieurs éléments, risque dans certains cas de pouvoir être forcé à l'écart de sa position fermée, en particulier si, par vandalisme ou, en déplacement, par effet aérodynamique, vibrations..., on le contraint à s'écarter de la caisse ou d'une partie fixée sur elle contre laquelle on l'a plaqué à la fermeture du toit.

On cherche une solution mécaniquement simple et performante dans la retenue du toit dans ces situations.

On peut également noter comme soucis ceux liés à une optimisation de positionnement du toit et/ou à une possible mise sous tension de celui-ci, en particulier dans son état fermé, ces soucis pouvant également apparaître en position escamotée du toit. La recherche de solutions ergonomiques, fiables et peu coûteuses est également un axe d'investigation qui a été ici considéré.

Pour satisfaire à tout ou partie de ces situations encore à améliorer, les solutions revendiquées sont proposées. La revendication 1 apporte une solution.

Un procédé de commande d'un toit escamotable articulé sur un véhicule constitue aussi un aspect de l'invention, comme présenté dans les revendications jointes. La revendication 19 apporte ainsi aussi une solution à tout ou partie des situations précitées encore à améliorer.

Il y est notamment prévu qu'une mise en butée entre lesdits premiers et seconds moyens complémentaires de retenue contrera favorablement un recul ultérieur de l'élément arrière de toit lorsque le toit est verrouillé et créera un blocage du toit sur la caisse.

D'autres caractéristiques et avantages de l'invention apparaissent dans la description de deux réalisations plus particulièrement envisagées en liaison avec les dessins annexés non limitatifs où :
- les figures 1,7 schématisent deux véhicules convertibles avec deux toits basculants différents, ici fermés,
- les figures 2, 3, 4 montrent trois étapes de mouvement du toit, successivement fermé, en position intermédiaire et plié, ouvert,
- la figure 5 détaille le toit fermé de la fig.2,
- la figure 6 montre un verrouillage possible du toit, coupe VI-VI fig.1, en partie suivant l'agrandissement local D,
- la figure 8 est l'agrandissement VIII de la figure 5,
- les figures 9 et 10 schématisent les coupes A-A et B-B de la fig.8,
- la figure 11 est l'agrandissement VIII de la figure 5, mais toit plié, ouvert,
- la figure 12 schématise la coupe A-A fig.11,
- les figures 13 et 14 schématisent des solutions de réglage lors de l'assemblage du toit et de la caisse.

Sur les figures, une croix marquée dans un rond définit une articulation, tel qu'un pivot ou un axe de pivotement entre deux éléments ou organes.

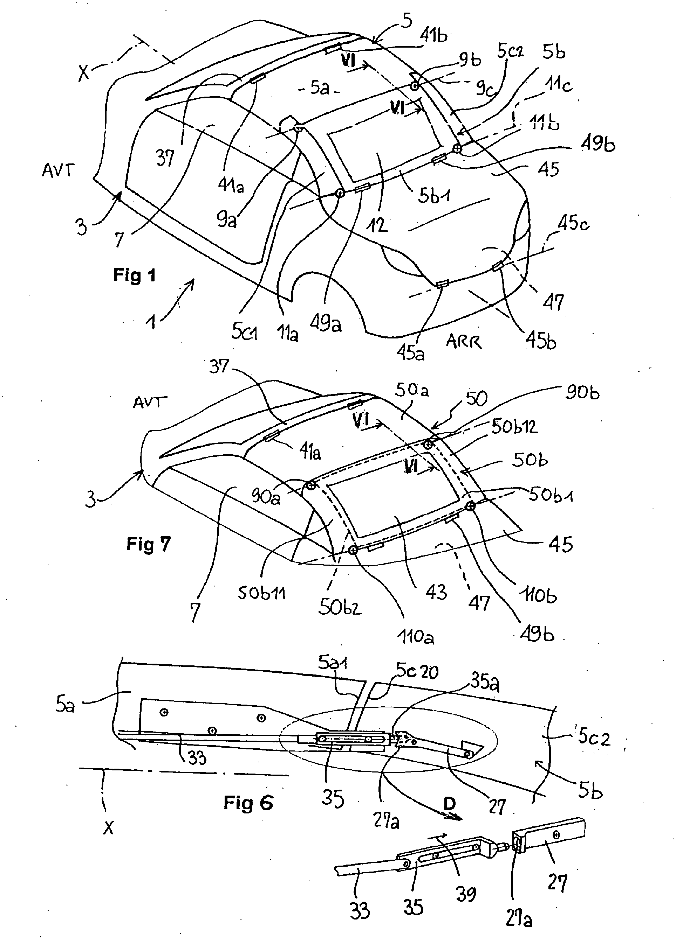

Figure 1, le véhicule convertible 1 comprend une caisse 3 et un toit basculant 5 articulé sur elle.

Le toit 5 comprend plusieurs éléments 5a,5b rigides de toit lui permettant de recouvrir l'habitacle 7 et de le découvrir.

Dans l'exemple, le toit 5 comprend ainsi un élément avant de toit 5a articulé en 9a, 9b, suivant l'axe transversal 9c, sur l'élément central 5b1 d'une partie arrière de toit 5b sur lequel s'articulent latéralement des éléments latéraux arrière de toit 5cl 5c2. Ici, il s'agit de custodes latérales.

L'élément rigide central arrière de toit 5b1 s'articule en 11a, 11b sur la caisse, suivant l'axe transversal 11c et peut comprendre la lunette arrière 12 fixée à lui, comme illustré.

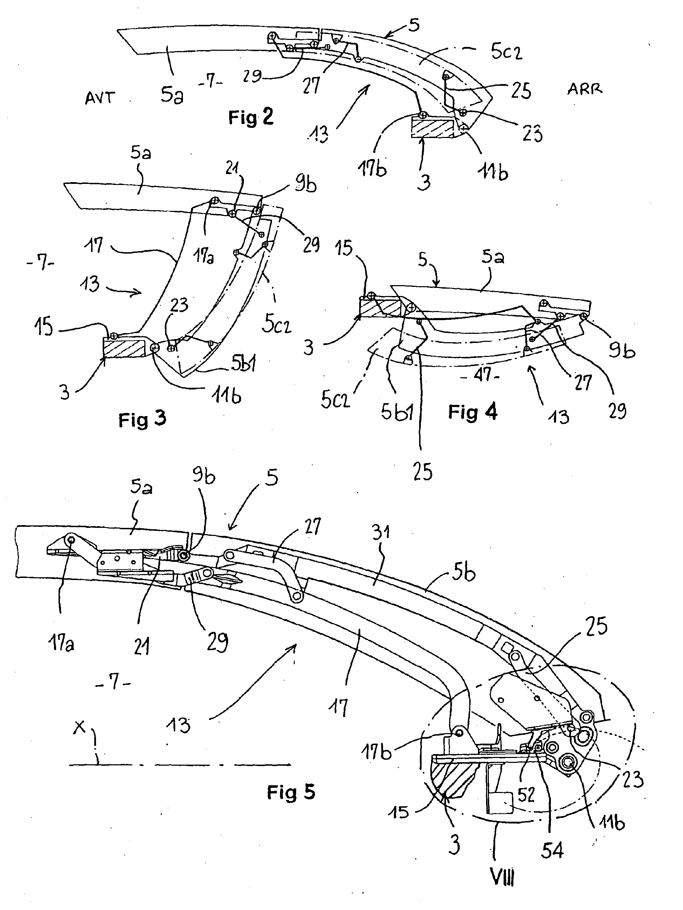

Figures 2 à 5, les moyens 13 d'entraînement et d'articulation du toit 5 sont prévus de part et d'autre de l'axe longitudinal X du véhicule, symétriquement. Seul l'un est ici représenté. Ils sont portés chacun par une platine 15 rapportée, fixée sur la caisse 3.

Ces organes ou moyens d'entraînement et d'articulation 13 définissent un mécanisme et sont donc adaptés à entraîner le toit 5 entre ses positions fermée/déployée et ouverte/pliée, la partie avant de toit 5a étant alors disposée au-dessus de la partie arrière de toit 5b, sensiblement à l'horizontale, avec leurs concavités face à face ; voir fig.4.

Les organes 13 comprennent de chaque côté un bras 17 latéral monté pivotant par rapport au châssis 3 et à l'élément avant de toit 5a, près du bord arrière de cet élément, selon deux axes de rotation 17a, 17b transversaux à la direction X. On nomme transversale, toute direction transversale, en particulier perpendiculaire, à l'axe X.

Ces organes de déplacement 13 comprennent également l'arbre transversal considéré d'entraînement en rotation, ici 11b, solidarisé à la partie arrière de toit.

Comme le pivot 9a, celui 9b est porté par un organe intermédiaire 21 fixé sur la partie avant de toit, latéralement. Sur lui s'articule le pivot 17a du bras 17.

La platine 15, qui peut être une poutre transversale de structuration, supporte ici l'arbre 11b d'entraînement et le pivot 17b.

Les éléments latéraux 5c1,5c2, qui peuvent être indépendant ou reliées par une partie transversale, sont montés mobiles par rapport à l'élément 5b1 entre une position d'utilisation dans laquelle l'élément central est entre eux, le toit étant dans sa position déployée, et une position de rangement dans laquelle l'élément central 5b1 est disposé au-dessus, le toit étant dans sa position pliée. A cet effet, le toit 5 comprend, pour le côté illustré, des moyens d'entraînement et de guidage arrière 25 et avant 27 adaptés à permettre le déplacement de l'élément latéral considéré, 5c1 ou 5c2, par rapport à l'élément central 5b1, quand la partie avant de toit 5a est déplacée par rapport audit élément central de toit.

Ces moyens de guidage 25, 27, ici des biellettes articulées à l'avant et à l'arrière, pourraient être des glissières, notamment pour les moyens arrière.

Les moyens de guidage arrière 25 et avant 27 sont reliés à pivotement sur l'élément latéral de toit concerné et sur la partie centrale arrière de toit 5b1.

A proximité de la biellette 27 se trouve en outre articulé le moyen d'entraînement 29, ici biellette, adapté à articuler l'un par rapport à l'autre l'élément latéral de toit correspondant et l'élément avant 5a de toit, suivant donc deux axes transversaux de pivotement.

En fonctionnement, le déplacement de l'élément central 5b1 par rapport à la partie avant de toit 5a entraîne le déplacement des biellettes 29 et donc des éléments latéraux 5c1, 5c2 de toit qui basculent par rapport à l'élément central arrière 5b1.

Au début de l'ouverture du toit, alors supposé fermé, les biellettes 29 permettent de pousser les éléments latéraux de toit dans une direction sensiblement perpendiculaire à la surface de l'élément central 5b1, ici vers le haut et l'arrière. Elles agissent à l'inverse à la fermeture.

De chaque côté du toit, les moyens de guidage/biellettes avant et arrière 27,25 pourront être articulé(e)s sur une pièce de structure fixée à l'élément 5b1.

Figure 6, on voit que favorablement un verrouillage réversible s'opérera en outre à la fermeture du toit au dessus de l'habitacle, entre l'élément avant de toit 5a et l'élément arrière articulé de toit, ici l'élément latéral 5c2.

Commandé par une tringlerie motorisée 33, on voit qu'un doigt 35a de verrou 35 coulissant sensiblement parallèlement à l'axe X peut venir, pour ce verrouillage, s'engager dans la tête creuse 27a du moyen de guidage, ici la biellette avant 27 à considérer ; voir flèche 39 figure 6. Le déverrouillage s'effectue à l'inverse, lorsque l'on souhaite ouvrir le toit. Les organes de verrouillage 27-27a et 35-35a sont disposés entre les bords transversaux respectivement avant 5c20 et arrière 5a1 des éléments de toit en cause.

Vers l'avant, l'élément avant de toit 5a est en outre favorablement verrouillé à la caisse 3, ici à la baie transversale de pare-brise 37, par d'autres verrous réversibles en soi connus, 41a, 41b.

Figure 7, le toit 50 comprend un élément avant de toit 50a et un élément arrière de toit 50b qui possède un élément extérieur de toit 50b1 monté articulé sur un élément de toit central 50b2 disposé dessous.

Ici, l'élément central 50b2 est un cadre structurel sur lequel s'articule l'élément 50b1, à la manière d'un élément de recouvrement. Il est ici formé d'une seule pièce par une partie centrale de liaison s'étendant entre les parties latérales 50b11, 50b12.

A travers l'élément de toit articulé 50b1, et plus particulièrement sa partie centrale, on peut prévoir la fixation de la lunette arrière 43.

Le cadre 50b2, ou tout élément central arrière de toit approprié, permet l'articulation du toit 50 à la caisse 3. Pour cela, les éléments de toit 50a, 50b2 sont articulés entre eux par les articulations 90a, 90b et, à l'arrière, l'élément de toit 50b2 est articulé sur la caisse, ou sur une platine telle que 15, par des articulations arrière 110a, 110b.

Le verrouillage avant entre l'élément de toit 50a et la caisse pourra à nouveau s'opérer par les verrous tels que 41a et, à l'arrière, entre ce même élément de toit et l'élément 50b1, par l'intermédiaire du système de verrou 27a-35 de la figure 6.

Pour d'autres détails sur les moyens d'entraînement et d'articulation pouvant être utilisés en relation avec le mode de réalisation de la figure 7, on peut prévoir les moyens illustrés sur les figures 2 à 5, en assimilant l'élément central arrière 5b1 à l'élément de toit 50b2 et les éléments latéraux de toit 5c1, 5c2 à l'élément de recouvrement 50b1.

Ainsi, grâce aux moyens d'écartement variables précités, notamment les biellettes, on pourra rendre l'élément arrière articulé 50b1 mobile par rapport à l'élément 50b2, donc à 50a. L'élément 50b2 pourra alors constituer un châssis intermédiaire de toit porteur de l'essentiel des articulations arrière, ici 110a, 110b, et des moyens 13 d'entraînement en particulier de chaque bras articulé 17.

Pour le déploiement et le repliement du toit 5 ou 50, le véhicule est également favorablement équipé d'un capot arrière mobile 45 recouvrant un coffre arrière 47. Typiquement, ce coffre sera adapté pour recevoir le toit plié, lorsque l'habitacle 7 est découvert, et pour y loger des bagages.

Le capot 45 de coffre sera favorablement monté basculant pour s'ouvrir de l'avant (AVT) vers l'arrière (ARR) et permettre alors l'entrée et la sortie du toit vis à vis du coffre. Pour cela, le capot 45 est ici articulé à l'arrière en 45a, 45b sur la caisse 3, axe transversal 45c.

A l'avant, le capot 45 peut aussi être articulé à la caisse par des articulations avant 49a, 49b lui permettant de s'ouvrir en basculant de l'arrière vers l'avant pour favoriser notamment l'accès aux bagages.

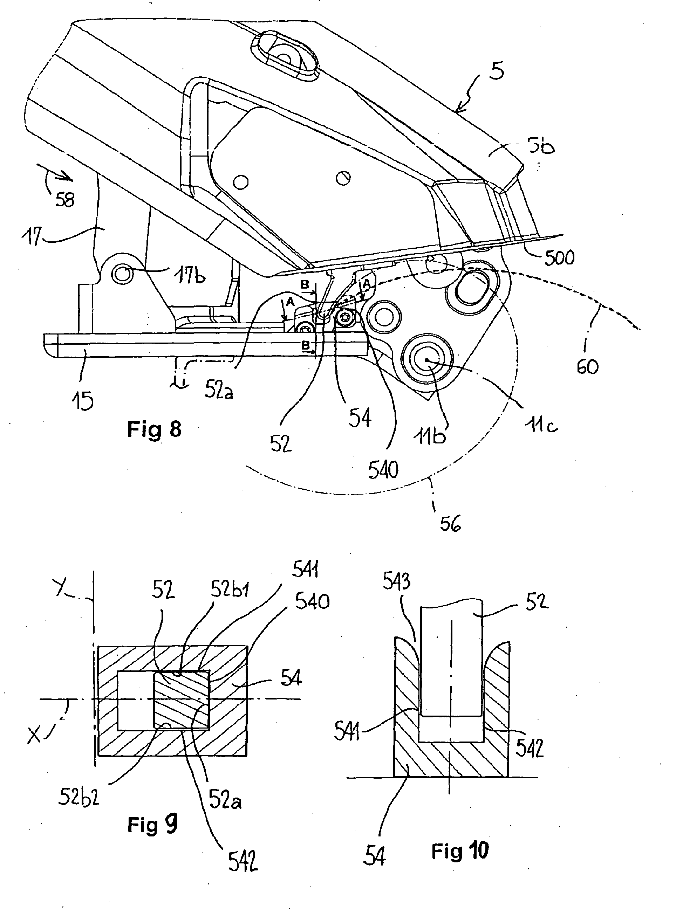

Selon une caractéristique importante de l'invention, le véhicule, quelle que soit la réalisation de son toit articulé, comprend, comme schématisé figures 5 et 8, des premiers moyens 52 et des seconds moyens 54 complémentaires de retenue du toit, prévus l'un sur l'élément arrière de toit 5b, 50b -fixés sur une partie structurelle rigide de celui-ci, comme illustré-, l'autre sur la caisse 3, ou sur un élément rapporté tel que chacune des platines 15.

Comme déjà indiqué, ces premiers et seconds moyens de retenue vont interagir pour contrer, par leur interaction et toit fermé au dessus de l'habitacle, un écartement de l'élément arrière de toit, tel que 5b, vis à vis de la caisse 3, cet écartement pouvant résulter d'une tentative d'effraction par une action forcée sur l'élément arrière de toit.

En particulier, on va ainsi s'opposer à un tel écartement de l'élément arrière de toit, lorsqu'il est sollicité en déplacement autrement que suivant son mouvement normal imposé, au moins à proximité de sa position fermée au dessus de l'habitacle 7, par le mécanisme 13 d'entraînement du toit.

On notera que, toit au repos et fermé comme figures 1, 2, 5, 7, 8, ces premiers et seconds moyens 52, 54 de retenue sont en contact entre eux. Ils sont rigides et comprennent des moyens complémentaires de butée, comme illustré sous la forme d'un doigt 52 et d'un organe creux 54 coopérant positivement et prévus de préférence, pour celui porté par le toit, latéralement sur le ou les éléments articulés de toit : 5c1, 5c2 ou 50b1.

Même si des éléments autres que mâle-femelle pourraient être retenus, comme par exemple une solution à surfaces de contact tangentes orientées selon la trajectoire de déplacement 56 du doigt 52 sur la figure 8, lorsque le toit est déplacé entre ces positions fermée et ouverte, on conseille que lesdits moyens complémentaires de retenue 52, 54 comprennent des surfaces de butée qui, en interagissant vont retenir cet élément arrière de toit.

Figure 8, on voit d'ailleurs que, toit fermé, l'arrière 52a du doigt 52 prévu sous la surface d'appui 500 de l'élément arrière 5b bute contre la paroi intérieure 540 de la cavité de l'organe creux 54.

Par cette surface de contact arrière empêchant le recul de l'organe 52 porté par le toit alors fermé, et même favorablement verrouillé, on va pouvoir, par butée, immobiliser le toit 5 par rapport à la caisse 3, et au besoin le mettre sous tension.

Cette retenue anti-écartement de l'élément arrière de toit s'opérera donc favorablement, et dans la pratique, en liaison avec le verrouillage du toit, une fois celui ci en position fermée. A cet égard, le verrouillage entre les éléments de toit avant et arrière, en particulier ceux 5a-5c2 de la figure 6, favorisera une action vers l'arrière et le bas, et donc un recul sensiblement dans le sens de la flèche 58 de la figure 8 de l'élément arrière 5b, donc de chaque doigt 52, vis à vis de la caisse, donc de l'organe 54 correspondant.

Figure 8, la surface arrière 52a de l'organe 52 mobile avec le toit présente une forme qui épouse la trajectoire 56 de cet organe lors du déplacement du toit entre ses positions fermée et ouverte, voir respectivement figures 2 et 4, assurant ainsi la situation de tangence précitée, vers la fin du mouvement de fermeture et toit fermé.

Figure 8, on a par ailleurs repéré en 60 la partie utile de la trajectoire théorique de déplacement de cet organe 52, lorsque le toit est verrouillé. On remarque que le doigt 52 s'étend suivant une direction inclinée par rapport à la verticale et à l'horizontale, en faisant saillie du toit en direction de l'avant de celui-ci et vers le bas.

On notera encore qu'en particulier une fois les éléments de toit 5a-5c1, 5c2 ou 50a-50b1 verrouillés entre eux, seuls les custodes 5c1, 5c2, ou seul l'élément articulé 50bl, peut/peuvent encore être forcé(es) en déplacement par rapport à la caisse alors que les organes d'entraînement 13 sont maintenus dans leur état déployé vers l'avant comme sur les figures 2 et 5.

On peut aussi prévoir que les moyens 52, 54 possèdent des surfaces latérales, respectivement 52b1, 52b2 et 541, 542 sur les figures 9 et 10, retenant l'élément arrière de toit considéré à l'encontre d'un mouvement latéral, transversalement donc à l'axe X. Ceci permet de positionner par exemple les custodes en Y par rapport au toit et de garantir une position précise, en particulier pour la réception de vitres latérales.

Favorablement, comme montré figure 8 et encore mieux figure 10, l'organe creux 54 possèdera une entrée 543 en forme d'entonnoir, pour guider la surface coopérante, ici 52, du toit.

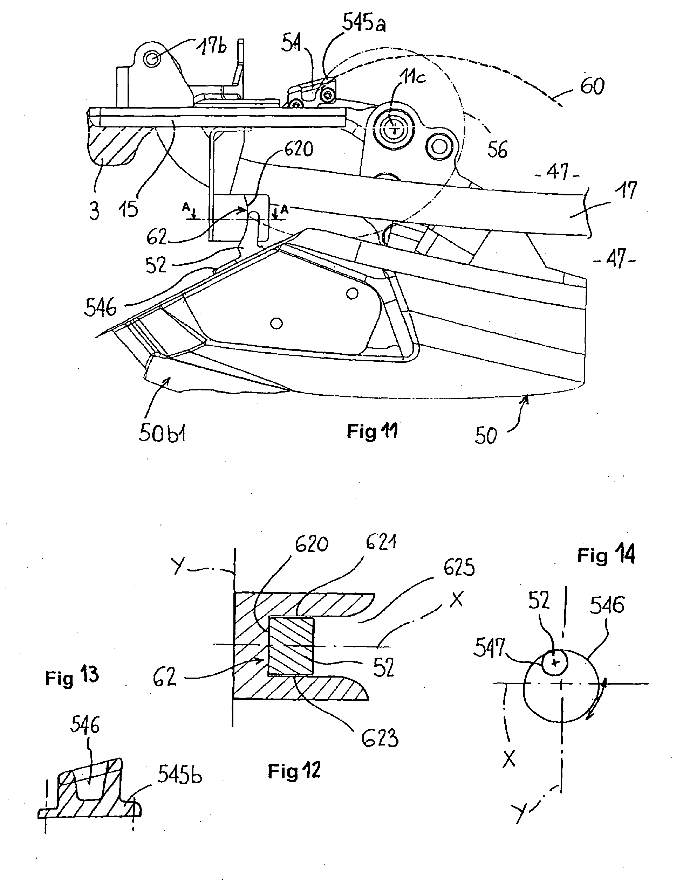

Figure 11, une deuxième butée 62 est prévue pour le positionnement du toit, ici 50, en position escamotée, comme en l'espèce à l'intérieur du coffre 47.

L'élément de la deuxième butée 62 qui reçoit un simple appui de l'organe 52 porté par l'/chaque élément arrière articulé (5c1, 5c2 ou 50b1), ici l'élément 50b1 de recouvrement, est disposé sous la platine 15 correspondante.

En particulier dans le cas des custodes latérales 5c1, 5c2, outre une surface d'appui frontal 620, l'organe de butée 62 fixe sur la caisse comprendra favorablement des surfaces d'appui latéral, 621, 623 figure 12, favorisant une immobilisation des custodes latéralement.

Chaque organe complémentaire de retenue 52 s'engagera favorablement avec la surface de butée 62 concernée à travers un orifice d'entrée évasé 625 ouvert en X.

Figures 13 et 14, on a schématisé deux illustrations montrant que la position entre les premiers et seconds moyens de retenue, ici 52, 54, peut être réglable par déplacement de l'un ou l'autre sur l'élément arrière de toit 5b ou 50b, ou sur la caisse 3.

On peut prévoir d'assurer donc une mise en tension du toit et/ou un réglage de celui ci dans son état fermé.

La mise sous tension pourra en particulier consister dans l'établissement du contact en butée entre les surfaces 52a et 540, comme décrit en référence à la figure 9 ci-avant, voire entre les éléments 52 et 62 comme sur la figure 11.

Pour atteindre tout ou partie de ces objectifs, on a en particulier schématisée figures 11 et 13 la prévision de plusieurs exemplaires interchangeables de parties d'éléments de retenue 52 et/ou 54, ici les blocs 545a, 545b porteurs de la cavité de réception, respectivement 54 et 546.

Figure 14, on a schématisée une autre solution où chaque pièce 546, de laquelle fait saillie l'organe mâle 52 ici porté par l'élément arrière de toit, comprend un excentrique permettant de déplacer suivant X et/ou Y la position de l'organe 52, dans le but de faire varier la position relative entre les premiers et seconds moyens de retenue, et donc de régler la position entre l'élément arrière de toit considéré et la caisse 3.

Ceci sera notamment utile pour le réglage du toit lors de son montage en usine et/ou pour la mise sous tension de l'élément arrière de toit, une fois le toit fermé et verrouillé, voire plus généralement pour tout positionnement opérationnel entre le toit et la caisse.

Des vis de réglage auraient pu également être prévues pour tout réglage ou mise sous tension souhaité(e) du toit.

De la description qui précède, on aura compris que l'engagement prévu entre les premiers et seconds moyens de retenue 52, 54 s'opposera, en particulier une fois le toit fermé et verrouillé au dessus de l'habitacle, à a priori tout écartement non souhaité de l'élément arrière de toit vis à vis de la caisse 3, tout particulièrement si cet élément arrière de toit est sollicité en déplacement autrement que suivant son mouvement normal imposé, au moins à proximité de sa position fermée, par ledit mécanisme 13 d'entraînement du toit. A cet égard, le recul de l'élément arrière de toit par rapport à la caisse, sous l'effet en particulier des moyens de verrouillage 27-27a ; 35-35a permettra d'atteindre cet objectif tout en assurant tant un blocage par mise en butée qu'une mise sous tension du toit dans cet état fermé et verrouillé, un effet complémentaire de retenue pouvant donc être également obtenu toit ouvert, par la coopération prévue aux figures 11 et 12.

## Revendications

1. Véhicule automobile comprenant :
- une caisse (3), un habitacle (7), et un toit (5) escamotable comprenant un élément de toit avant 5a et un élément de toit arrière (5b), articulés l'un sur l'autre,
- des moyens (13) pour entrainer en déplacement lesdits éléments de toit avant et arrière entre une position fermée où ils son déployés l'un derrière l'autre et recouvrent l'habitacle et une position escamotée où ils sont repliés à l'écart du dessus de cet habitacle,
- et des premiers et seconds moyens complémentaires de retenue (52, 54) prévus respectivement sur l'élément arrière de toit (5b, 50b) et sur la caisse (3), ou sur des parties intermédiaires (15) fixées à l'un ou l'autre, et interagissant pour contrer, toit fermé, un écartement de l'élément arrière de toit vis-à-vis de la caisse,
**caractérisé en ce que** l'élément de toit arrière est en outre articulé sur la caisse et les premiers et seconds moyens de retenue (52,54) définissent des organes complémentaires de butée fixes respectivement sur l'élément arrière de toit (5b,50b) et sur la caisse (3), ou sur lesdites parties intermédiaires (15), et qui, lorsqu'ils viennent en butée entre eux, bloquent le toit dans son état fermé, en retenant l'élément arrière de toit (5b, 50b) à l'encontre dudit écartement.

2. Véhicule selon la revendication 1, **caractérisé en ce que** l'un (54) des organes de butée est creux pour recevoir là en butée l'organe complémentaire (52).

3. Véhicule selon la revendication 1 ou 2, **caractérisé en ce que** les éléments avant et arrière de toit comprennent des premiers organes de verrouillage entre eux (9a, 9b ; 90a, 90b) et/ou l'élément avant de toit comprend des seconds organes (41a, 41b) de verrouillage par rapport à la caisse (3) du véhicule, ces organes de verrouillage, d'une part, et lesdits organes complémentaires de butée, d'autre part, coopérant entre eux dans l'état fermé du toit pour contrer ledit écartement de l'élément arrière de toit (5b, 50b) vis-à-vis de la caisse.

4. Véhicule selon l'une des revendications précédentes, **caractérisé en ce qu'**ensemble les moyens complémentaires de butée (52, 54) et les organes de verrouillage assurent une mise en tension du toit dans son état fermé.

5. Véhicule selon l'une des revendications précédentes, **caractérisé en ce que** les premiers moyens de retenue (52) sont fixés sur une partie structurelle de l'élément arrière de toit.

6. Véhicule selon l'une des revendications précédentes, **caractérisé en ce que :**
- l'élément de toit arrière possède un élément de toit articulé (50b1) qui présente des parties latérales liées entre elles, transversalement à l'axe longitudinal X du véhicule, par une partie de liaison et qui est monté articulé sur un élément de toit central arrière (50b2) situé entre lesdites parties latérales,
- ou l'élément arrière de toit (5b) comprend un élément central arrière de toit (5b1) et deux éléments articulés latéraux de toit (5c1, 5c2) montés articulés sur l'élément central arrière de toit et disposés de part et d'autre de celui-ci, au moins dans ladite position fermée.

7. Véhicule selon la revendication 6, **caractérisé en ce que** l'élément central arrière de toit comprend une lunette arrière fixe sur lui.

8. Véhicule selon la revendication 6 ou 7, **caractérisé en ce que** l'élément de toit avant (5a, 50a) s'articule sur ledit élément de toit central arrière (5b1, 50b2) qui s'articule lui-même à la caisse (3).

9. Véhicule selon l'une des revendications 6 à 8, **caractérisé en ce que** celui (52) desdits premiers et seconds moyens de retenue fixé sur l'élément arrière de toit (5b ; 50b) est fixé sur une partie structurelle de l'élément articulé considéré (5c1, 5c2 ; 50b1).

10. Véhicule selon l'une des revendications précédentes, **caractérisé en ce que** les premiers et seconds moyens de retenue comprennent respectivement au moins un doigt (52) et un organe creux coopérant (54), le doigt s'engageant dans l'organe creux lors de la fermeture du toit.

11. Véhicule selon la revendication 10, **caractérisé en ce que,** toit fermé, le doigt (52) s'étend suivant une direction inclinée par rapport à la verticale et à l'horizontale, en faisant saillie du toit (5, 50) en direction de l'avant de celui-ci et vers le bas.

12. Véhicule selon l'une des revendications précédentes, **caractérisé en ce que** les moyens complémentaires de butée possèdent:
- une surface de contact arrière (52a, 540) empêchant le recul de l'élément arrière de toit lorsque le toit (5, 50) est verrouillé,
- et/ou des surfaces latérales (52b1, 52b2 ; 541, 542) qui retiennent l'élément arrière de toit à l'encontre d'un mouvement latéral.

13. Véhicule selon la revendication 12, **caractérisé en ce que** la surface de contact arrière (52a, 540) possède une forme qui épouse sensiblement la trajectoire (56) que suit celui des moyens complémentaires de butée (52) qui est lié à l'élément arrière de toit (5b, 50b), lors de la fermeture du toit.

14. Véhicule selon l'une des revendications précédentes, **caractérisé en ce qu'**il comprend au moins une butée (62) de positionnement du toit en position escamotée qui reçoit un simple appui desdits premiers moyens de retenue (52), avec alors une retenue de l'élément arrière de toit (5b, 50b) latéralement, par des surfaces d'appui latérales (621, 623), et/ou longitudinalement, par des surfaces d'appui frontales (620).

15. Véhicule selon la revendication 3, ou la revendication 3 et l'une des revendications 4 à 14 rattachée à elle, **caractérisé en ce que :**
- les premiers organes de verrouillage (27a, 35a) sont disposés entre des bords respectivement avant et arrière de ces éléments de toit (5a, 5c1, 5c2 ; 50a, 50b1),
- et/ou les seconds organes de verrouillage (41a, 41b) sont disposés au moins en partie vers l'avant de l'élément de toit avant (5a, 50a),
- et lesdits premiers ou seconds moyens de retenue sont disposés à proximité de bords latéraux, du bas et de l'arrière de l'élément arrière de toit.

16. Véhicule selon l'une des revendications précédentes, **caractérisé en ce que** celui (52) desdits premiers et seconds moyens de retenue lié à la caisse est porté par une platine intermédiaire (15) fixée à cette caisse et sur laquelle s'articulent des moyens d'articulation de certains au moins des éléments de toit.

17. Véhicule selon l'une des revendications précédentes, **caractérisé en ce que** la position entre lesdits premiers et seconds moyens de retenue (52, 54) est réglable par déplacement de l'un ou l'autre sur l'élément arrière de toit (5b, 50b) ou sur la caisse (3).

18. Véhicule selon l'une des revendications précédentes, **caractérisé en ce qu'**afin d'assurer un réglage dudit toit et/ou une mise en tension de celui-ci dans son état fermé:
- lesdits premiers et/ou seconds moyens de retenue (52, 54) comprennent plusieurs exemplaires (545a, 545b) interchangeables de parties desdits premiers et/ou seconds moyens de retenue, ou,
- lesdits premiers et/ou seconds moyens de retenue comprennent un organe de réglage (546, 547) pour faire varier leur position par rapport au toit et/ou à la caisse.

19. Procédé de réalisation et de commande d'un toit (5, 50) escamotable sur un véhicule comprenant une caisse (3) et un habitacle (7), où, pour fermer ce toit depuis une position escamotée, où des éléments avant (5a, 50a) et arrière du toit (5b,50b) sont situés à l'écart du dessus de l'habitacle, vers une position fermée où ces éléments recouvrent l'habitacle, on articule l'élément de toit avant sur l'élément arrière de toit et, lors de la fermeture du toit, on engage l'un avec l'autre des premiers moyens et des seconds moyens complémentaires de retenue (52,54) prévus respectivement sur l'élément arrière de toit et sur la caisse (3), ou sur des parties (15) fixées à l'un ou l'autre, de telle sorte que cet engagement s'oppose, toit fermé, à un écartement de l'élément arrière de toit vis-à-vis de la caisse,
**caractérisé en ce que :**
- on réalise lesdits premiers et seconds moyens de retenue (52,54) comme des organes complémentaires de butée fixement disposés,
- pour fermer le toit vers ladite position fermée, on articule l'élément arrière de toit sur la caisse,
- et, lors de la fermeture du toit, on verrouille l'élément avant (5a,50a) et l'élément arrière de toit (5b,50b) et/ou l'élément avant de toit et la caisse (3) et l'engagement entre lesdits premiers et seconds moyens de retenue (52,54) comprend la mise en butée entre eux desdits organes complémentaires de butée, de sorte à agir ainsi contre un recul ultérieur de l'élément arrière de toit lorsque le toit est verrouillé, bloquant donc le toit sur la caisse.

## Claims

1. Motor vehicle comprising:
- a body (3), a cabin (7), and a retractable roof (5) comprising a front roof element (5a) and a rear roof element (5b), articulated one on the other,
- means (13) for causing a movement of the said front and rear roof elements between a closed position where they are deployed one behind the other and cover the passenger compartment and a retracted position where they are folded away from the top of this passenger compartment,
- and first and second complementary holding means (52, 54) provided respectively on the rear roof element (5b, 50b) and on the body (3), or on intermediate parts (15) fixed to one or other, and interacting in order, with the roof closed, to counter a separation of the rear roof element vis-à-vis the body,
**characterised in that** the rear roof element is also articulated on the body and the first and second holding means (52, 54) define complementary stop members fixed respectively to the rear roof element (5b, 50b) and to the body (3), or to the said intermediate parts (15), and which, when they come into abutment on each other, lock the roof in its closed state, holding the rear roof element (5b, 50b) counter to the said separation.

2. Vehicle according to claim 1, **characterised in that** one (54) of the stop members is hollow in order to receive in abutment the complementary member (52).

3. Vehicle according to claim 1 or 2, **characterised in that** the front and rear roof elements comprise first members (9a, 9b; 90a, 90b) for locking to each other and/or the front roof element comprises second members (41a, 41b) for locking with respect to the body (3) of the vehicle, these locking members on the one hand and the said complementary stop members on the other hand cooperating with each other in the closed state of the roof in order to counter the said separation of the rear roof element (5b, 50b) vis-à-vis the body.

4. Vehicle according to one of the preceding claims, **characterised in that** the complementary stop means (52, 54) and the locking members provide together a tensioning of the roof in its closed state.

5. Vehicle according to one of the preceding claims, **characterised in that** the first holding members (52) are fixed to a structural part of the rear roof element.

6. Vehicle according to one of the preceding claims, **characterised in that:**
- the rear roof element has an articulated roof element (50b1) that has lateral parts connected together, transversely to the longitudinal axis X of the vehicle, by a connecting part, and which is mounted articulated on a rear central roof element (50b2) situated between the said lateral parts,
- or the rear roof element (5b) comprises a central rear roof element (5b1) and two lateral articulated roof elements (5c1, 5c2) mounted articulated on the central rear roof element and disposed on each side thereof, at least in the said closed position.

7. Vehicle according to claim 6, **characterised in that** the rear central roof element comprises a rear window fixed to it.

8. Vehicle according to claim 6 or 7, **characterised in that** the front roof element (5a, 50a) is articulated on the said rear central roof element (5b1, 50b2), which is itself articulated on the body (3).

9. Vehicle according to one of claims 6 to 8, **characterised in that** the particular one (52) of the said first and second holding means that is fixed to the rear roof element (5b; 50b) is fixed to a structural part of the articulated element in question (5c1, 5c2; 50b1).

10. Vehicle according to one of the preceding claims, **characterised in that** the first and second holding means comprise respectively at least one finger (52) and a cooperating hollow member (54), the finger engaging in the hollow member when the roof is closed.

11. Vehicle according to claim 10, **characterised in that,** with the roof closed, the finger (52) extends in a direction inclined with respect to the vertical and horizontal, projecting from the roof (5, 50) in the direction of the front thereof and downwards.

12. Vehicle according to one of the preceding claims, **characterised in that** the complementary stop means have:
- a rear contact surface (52a, 540) preventing the retraction of the rear roof element when the roof (5, 50) is locked,
- and/or lateral surfaces (52b1, 52b2; 541, 542) that hold the rear roof element counter to a lateral movement.

13. Vehicle according to claim 12, **characterised in that** the rear contact surface (52a, 540) has a shape that substantially matches the path (56) followed by the particular one of the complementary stop means (52) that is connected to the rear roof element (5b, 50b), when the roof is being closed.

14. Vehicle according to one of the preceding claims, **characterised in that** it comprises at least one stop (62) for positioning the roof in the retracted position, which receives a simple abutment of the said first holding means (52), with then a holding of the rear roof element (5b, 50b) laterally, by lateral support surfaces (621, 623), and/or longitudinally, by front support surfaces (620).

15. Vehicle according to claim 3, or claim 3 and one of claims 4 to 14 attached thereto, **characterised in that:**
- the first locking members (27a, 35a) are disposed between respectively front and rear edges of said roof elements (5a, 5c1, 5c2; 50a, 50b1),
- and/or the second locking members (41a, 41b) are disposed at least partly towards the front of the front roof element (5a, 50a),
- and the said first or second holding means are disposed close to lateral edges, and the bottom and the rear of the rear roof element.

16. Vehicle according to one of the preceding claims, **characterised in that** the particular one (52) of the said first and second holding means that is connected to the body is carried by an intermediate plate (15) fixed to said body and on which articulation means for at least some of the roof elements are articulated.

17. Vehicle according to one of the preceding claims, **characterised in that** the position between the said first and second holding means (52, 54) is adjustable by movement of one or other on the rear roof element (5b, 50b) or on the body (3).

18. Vehicle according to one of the preceding claims, **characterised in that,** in order to provide an adjustment of the said roof and/or a tensioning thereof in its closed state:
- the said first and/or second holding means (52, 54) comprises several interchangeable examples (545a, 545b) of parts of the said first and/or second holding means, or
- the said first and/or second holding means comprise an adjustment member (546, 547) in order to vary their position with respect to the roof and/or body.

19. Method of producing and controlling a retractable roof (5, 50) on a vehicle comprising a body (3) and a passenger compartment (7), where, in order to close this roof from a retracted position in which front (5a, 50a) and rear (5b, 50b) elements of the roof are situated away from the top of the passenger compartment, towards a closed position in which these elements cover the passenger compartment, the front roof element is articulated on the rear roof element and, when the roof is closed, one of the first means and second complementary holding means (52, 54) provided respectively on the rear roof element and on the body (3) is engaged with the other, or on parts (15) fixed to one or the other, so that this engagement, with the roof closed, opposes a separation of the rear roof element vis-à-vis the body, **characterised in that:**
- the said first and second holding means (52, 54) are produced as complementary stop means fixedly disposed,
- to close the roof towards to the closed position, the rear roof element is articulated on the body,
- and, when the roof is closed, the front element (5a, 50a) and the rear roof element (5b, 50b) and/or the front roof element and the body (3) are locked and the engagement between the said first and second holding means (52, 54) comprises the said complementary stop members being put in abutment on each other, so as thus to act counter to a subsequent retraction of the rear roof element when the roof is locked, therefore locking the roof on the body.

## Patentansprüche

1. Kraftfahrzeug mit:
- einer Karosserie (3), einer Fahrgastzelle (7) und einem versenkbaren Dach (5) mit einem vorderen Dachelement (5a) und einem hinteren Dachelement (5b), die aneinander angelenkt sind,
- einer Einrichtung (13) zum Herbeiführen einer Verschiebung des vorderen und hinteren Dachelements zwischen einer geschlossenen Position, in welcher diese eines hinter dem anderen ausgefahren sind und die Fahrgastzelle abdecken, und einer versenkten Position, in welcher diese in einer Entfernung zur Oberseite dieser Fahrgastzelle zusammengelegt sind,
- und ersten und zweiten komplementären Halteelementen (52, 54), die jeweils am hinteren Dachelement (5b, 50b) und an der Karosserie (3) oder an Zwischenbereichen (15), die an dem einen oder der anderen befestigt sind, vorgesehen sind und derart zusammenwirken, dass sie bei geschlossenem Dach einer Entfernung des hinteren Dachelements gegenüber der Karosserie entgegentreten,
**dadurch gekennzeichnet, dass** das hintere Dachelement zudem an der Karosserie angelenkt ist und die ersten und zweiten Halteelemente (52, 54) komplementäre Anschlagelemente bilden, die jeweils an dem hinteren Dachelement (5b, 50b) und an der Karosserie (3) oder an den Zwischenbereichen (15) befestigt sind, und die, wenn sie in Anstoß aneinander gelangen, das Dach in seinem geschlossenen Zustand blockieren, indem das hintere Dachelement (5b, 50b) gegen diese Entfernung zurückgehalten wird.

2. Fahrzeug nach Anspruch 1, **dadurch gekennzeichnet, dass** eines (54) der Anschlagelemente hohl ist, um darin beim Anstoßen das komplementäre Element (52) aufzunehmen.

3. Fahrzeug nach Anspruch 1 oder 2, **dadurch gekennzeichnet, dass** das vordere und hintere Dachelement erste gegenseitige Verriegelungselemente (9a, 9b; 90a, 90b) aufweisen und/oder das vordere Dachelement zweite Verriegelungselement (41a, 41b) in Bezug zur Karosserie (3) des Fahrzeugs aufweist, wobei diese Verriegelungselemente einerseits und die komplementären Anschlagelemente andererseits untereinander im geschlossenen Zustand des Dachs zusammenwirken, um der Entfernung des hinteren Dachelements (5b, 50b) gegenüber der Karosserie entgegenzuwirken.

4. Fahrzeug nach einem der vorhergehenden Ansprüche, **dadurch gekennzeichnet, dass** die Gesamtheit der komplementären Anschlagelement (52, 54) und der Verriegelungselemente eine Spannung des Dachs in seinem geschlossenen Zustand sicherstellen.

5. Fahrzeug nach einem der vorhergehenden Ansprüche, **dadurch gekennzeichnet, dass** die ersten Halteelemente (52) an einem Strukturbereich des hinteren Dachelements befestigt sind.

6. Fahrzeug nach einem der vorhergehenden Ansprüche, **dadurch gekennzeichnet, dass:**
- das hintere Dachelement ein angelenktes Dachelement (50b1) umfasst, das durch einen Verbindungsbereich untereinander verbundene Seitenbereiche, quer zur Längsachse X des Fahrzeugs, aufweist und das gelenkig an ein hinteres, zentrales Dachelement (50b2) angelenkt ist, das zwischen den Seitenbereichen liegt,
- oder das hintere Dachelement (5b) ein hinteres, zentrales Dachelement (5b1) und zwei seitlich angelenkte Dachelemente (5c1, 5c2) umfasst, die an dem hinteren, zentralen Dachelement gelenkig angebracht sind und wenigstens in der geschlossenen Position beiderseits desselben angeordnet sind.

7. Fahrzeug nach Anspruch 6, **dadurch gekennzeichnet, dass** das hintere, zentrale Dachelement eine an diesem festgelegte Heckscheibe aufweist.

8. Fahrzeug nach Anspruch 6 oder 7, **dadurch gekennzeichnet, dass** das vordere Dachelement (5a, 50a) an dem hinteren, zentralen Dachelement (5b1, 50b2) angelenkt ist, das wiederum an die Karosserie (3) angelenkt ist.

9. Fahrzeug nach einem der Ansprüche 6 bis 8, **dadurch gekennzeichnet, dass** dasjenige (52) der ersten und zweiten Halteelemente, das an dem hinteren Dachelement (5b; 50b) befestigt ist, an einem Strukturbereich des betreffenden angelenkten Elements (5c1, 5c2; 50b1) befestigt ist.

10. Fahrzeug nach einem der vorhergehenden Ansprüche, **dadurch gekennzeichnet, dass** die ersten und zweiten Halteelemente jeweils wenigstens einen Finger (52) und ein kooperierendes Hohlelement (54) umfassen, wobei der Finger bei der Schließung des Dachs in das Hohlelement eingreift.

11. Fahrzeug nach Anspruch 10, **dadurch gekennzeichnet, dass** sich der Finger (52) bei geschlossenem Dach in einer schrägen Richtung in Bezug zu der Vertikalen und der Horizontalen erstreckt und einen Ansatz des Dachs (5, 50) in Richtung nach vorne desselben und nach unten bildet.

12. Fahrzeug nach einem der vorhergehenden Ansprüche, **dadurch gekennzeichnet, dass** die komplementären Anschlagelemente aufweisen:
- eine hintere Kontaktfläche (52a, 540), die das Zurückspringen des hinteren Dachelements verhindert, während das Dach (5, 50) verriegelt wird,
- und/oder Seitenflächen (52b1, 52b2, 541, 542), die das hintere Dachelement gegen eine seitliche Bewegung zurückhalten.

13. Fahrzeug nach Anspruch 12, **dadurch gekennzeichnet, dass** die hintere Kontaktfläche (52a, 540) eine Form aufweist, die sich im Wesentlichen der Bewegungsbahn (56) anschmiegt, der das komplementäre Anschlagelement (52) bei der Schließung des Dachs folgt, das mit dem hinteren Dachelement (5b, 50b) verbunden ist.

14. Fahrzeug nach einem der vorhergehenden Ansprüche, **dadurch gekennzeichnet, dass** dieses wenigstens einen Anschlag (62) zur Positionierung des Dachs in der versenkten Position umfasst, der einen einfachen Anschlag der ersten Halteelemente (52) aufnimmt, einem seitlichen Halt des hinteren Dachelements (5b 50b) durch seitliche Anschlagflächen (621, 623) und/oder in Längsrichtung durch vordere Anschlagflächen (620).

15. Fahrzeug nach Anspruch 3 oder Anspruch 3 und einem der Ansprüche 4 bis 14, die diesem angehängt sind, **dadurch gekennzeichnet, dass:**
- die ersten Verriegelungselemente (27a, 35a) jeweils vor und hinter diesen Dachelementen (5a, 5c1, 5c2; 50a, 50b1) angeordnet sind,
- und/oder die zweiten Verriegelungselemente (41a, 41b) wenigstens teilweise vor dem vorderen Dachelement (5a, 50a) angeordnet sind,
- und die ersten oder zweiten Halteelemente in der Nähe der Seitenränder, unterhalb und hinter dem hinteren Dachelement angeordnet sind.

16. Fahrzeug nach einem der vorhergehenden Ansprüche, **dadurch gekennzeichnet, dass** dasjenige (52) der ersten und zweiten Halteelemente, das mit der Karosserie verbunden ist, von einer Zwischenplatten (50) getragen wird, die an dieser Karosserie befestigt ist, und an welchem Gelenkteile wenigstens einiger der Dachelemente angelenkt sind.

17. Fahrzeug nach einem der vorhergehenden Ansprüche, **dadurch gekennzeichnet, dass** die Position zwischen den ersten und zweiten Halteelementen (52, 54) durch Verschiebung des ein oder anderen an dem hinteren Dachelement (5b, 50b) oder an der Karosserie (3) einstellbar ist.

18. Fahrzeug nach einem der vorhergehenden Ansprüche, **dadurch gekennzeichnet, dass,** um eine Einstellung des Dachs und/oder einer Spannung desselben in seinem geschlossenen Zustand sicherzustellen:
- die ersten und/oder zweiten Halteelemente (52, 54) mehrere austauschbare Exemplare (545a, 545b) von Teilen der ersten und/oder zweiten Haltemittel umfassen, oder,
- die ersten und/oder zweiten Haltemittel ein Einstellelement (546, 547) umfassen, um ihre Position in Bezug zu dem Dach und/oder der Karosserie zu variieren.

19. Verfahren zur Realisierung und Steuerung eines versenkbaren Dachs (5, 50) an einem Fahrzeug mit einer Karosserie (3) und einer Fahrgastzelle (7), in welchem, um das Dach aus einer versenkten Position zu verschließen, in welcher die vorderen (5a, 50a) und hinteren (5b, 50b) Elemente des Dachs in einer Entfernung von der Oberseite der Fahrgastzelle angeordnet sind, in eine geschlossene Position, in welcher diese Elemente die Fahrgastzelle abdecken, wird das vordere Dachelement an dem hinteren Dachelement angelenkt und bei der Schließung des Dachs wird eines mit einem anderen erster Halteelemente und zweiter komplementärer Halteelemente (52, 54) in Eingriff gebracht, die jeweils an dem hinteren Dachelement und an der Karosserie (3) oder an Bereichen (15), die an dem einen oder der anderen befestigt sind, vorgesehen sind, derart, dass sich dieser Eingriff bei geschlossenem Dach einer Entfernung des hinteren Dachelements gegenüber der Karosserie entgegensetzt, **dadurch gekennzeichnet, dass:**
- die ersten und zweiten Halteelemente (52, 54) als komplementäre, fest angeordnete Anschlagelemente ausgebildet werden,
- zum Schließen des Dachs in die geschlossene Position das hintere Dachelement an der Karosserie angelenkt wird,
- und bei der Schließung des Dachs das vordere Dachelement (5a, 50a) und das hintere Dachelement (5b, 50b) und/oder das vordere Dachelement und die Karosserie (3) verriegelt werden und der Eingriff zwischen den ersten und zweiten Halteelementen (52, 54) den Anschlag zwischen diesen komplementären Anschlagelementen umfasst, derart, dass einem späteren Zurückspringen des hinteren Dachelements entgegen gewirkt wird, während das Dach verriegelt wird, indem somit das Dach an der Karosserie blockiert wird.
